# EUROPEAN PATENT APPLICATION

(11) **EP 3 312 396 A1**
(43) Date of publication of application: **25.04.2018**
(21) Application number: 17196817.5
(22) Date of filing: 17.10.2017
(51) Int. Cl.: F01M 1/02, F01M 5/00, F16H 57/04

(54) **OIL SUPPLY SYSTEM**

(30) Priority: 21.10.2016 JP 2016207018
(71) Applicant: AISIN SEIKI KABUSHIKI KAISHA, Kariya-shi Aichi 448-8650 (JP)
(72) Inventor: HATA, Hirokazu, Kariya-shi, Aichi 448-8650 (JP)
(74) Representative: Kramer Barske Schmidtchen Patentanwälte PartG mbB

(57) **Abstract**

An oil supply system (100, 200, 300) includes a first oil pump (P1) driven by a drive force generated at an internal combustion engine (1), and an electrically-driven second oil pump (P2). The first oil pump (P1) includes a first suction flow path (11) sucking an oil in an oil reservoir (3a), and a first supply flow path (12) supplying the sucked oil to an oil hydraulic device (3). The second oil pump (P2) includes a second suction flow path (21) sucking the oil in the oil reservoir (3a), a second supply flow path (22) including a check valve (23) supplying the sucked oil to the first suction flow path (11), and a relief flow path (24) allowing the oil to discharge when a discharge pressure level of the second oil pump (P2) increases. The relief flow path (24) is connected to the first suction flow path (11).

## Description

### TECHNICAL FIELD

This disclosure generally relates to an oil supply system.

### BACKGROUND DISCUSSION

A known oil hydraulic supply device including, a first oil pump driven by an internal combustion engine, and an electrically-driven second oil pump, to supply an oil to an automatic transmission, the oil hydraulic supply device driving the second oil pump in a case where the internal combustion engine stops, is disclosed in JP2006-161853A (hereinafter referred to as Patent reference 1).

In Patent reference 1, the oil hydraulic supply device is formed with a main oil hydraulic circuit supplying the oil from the first oil pump to the automatic transmission, and a supplementary oil hydraulic circuit sending out the oil from the second oil pump to the automatic transmission via a check valve, and is provided with a relief circuit discharging the oil when the pressure level of the second oil pump increases.

As disclosed in Patent reference 1, a vehicle including the automatic transmission changing gears by an oil pressure requires the oil pressure for maintaining the automatic transmission to be in a gear-shift state in a case where an idle stop control or a coast stop control is performed, the idle stop control automatically stopping the internal combustion engine when the vehicle is in a stopped state, the coast stop control automatically stopping the internal combustion engine from the start of the speed reduction for stopping the vehicle.

From such reason, when the internal combustion engine is in an auto-stop state, the oil hydraulic supply device sets a target value of electricity for supplying the oil pressure required to maintain the automatic transmission in the gear-shift state, and operates the second oil pump in a state where the electricity of the target value is supplied.

According to Patent reference 1, the oil hydraulic supply device is configured such that a single suction flow path that is shared by the first oil pump and the second oil pump sucks the oil in an oil pan. In such configuration, because a negative pressure is acted on the suction flow path even only the second oil pump operates, a phenomenon in which a part of the oil that should be supplied to the automatic transmission from the second oil pump flows back to the first oil pump which is in a stopped state may be generated (a phenomenon in which the oil flows from a discharge side to a suction side of the pump), and therefore, the oil pressure level may be decreased.

In a case where the oil pressure level decreases by the phenomenon, the target value of the electricity being supplied to the second oil pump is required to be set high, and the electricity may be consumed wastefully.

Moreover, according to the oil hydraulic supply device of this configuration, the automatic transmission is required to be acted with the oil pressure continuously regardless of operation statuses of the internal combustion engine. For example, when the idle stop control is performed, the second oil pump starts operation before the internal combustion engine completely stops. From the same reason, when the idle stop control is released and the internal combustion engine starts, the second oil pump is controlled to continuously drive by a specified time (may be until the oil pressure reaches a specified pressure level).

In addition, when the first oil pump and the second oil pump operate simultaneously, a part of the oil from the second oil pump is discharged via the relief circuit in a case where a discharge pressure level of the first oil pump is higher than the discharge pressure level of the second oil pump. When the part of the oil from the second oil pump is discharged, the negative load acted on the second oil pump increases and the energy may be wastefully consumed.

A need thus exists for an oil supply system that supplies an oil from an oil pump driven by an internal combustion engine and from an electrically-driven oil pump to an oil hydraulic device to reduce the wasteful loss of energy.

### SUMMARY

According to an aspect of this disclosure, an oil supply system includes a first oil pump driven by a drive force generated at an internal combustion engine that performs a stop control and a start control in response to a running state of a vehicle, and an electrically-driven second oil pump. The first oil pump includes a first suction flow path sucking an oil in an oil reservoir and a first supply flow path supplying the sucked oil to an oil hydraulic device. The second oil pump includes a second suction flow path sucking the oil in the oil reservoir, and a second supply flow path including a check valve supplying the sucked oil to the first suction flow path, and a relief flow path allowing the oil to discharge when a discharge pressure level of the second oil pump increases. The relief flow path is connected to the first suction flow path.

According to the characteristic configuration of this disclosure, the oil in the oil reservoir is sucked via the second suction flow path when only the second oil pump operates. Accordingly, unlike the configuration disclosed in Patent reference 1, the part of the oil supplied from the second oil pump does not flow back to the first oil pump, and therefore, the oil pressure level acted on the oil hydraulic device is inhibited from decreasing. Here, assuming the configuration in which the relief flow path includes a relief valve, the negative pressure of the second oil pump is acted on a downstream side of the relief flow path because the downstream side of the relief flow path is connected to the first suction flow path in a state where the first oil pump and the second oil pump operate simultaneously and the relief valve opens. Accordingly, the relief pressure level of the relief valve may substantially decrease, and the negative pressure acted on the first suction flow path may be reduced. Thus, in the oil supply system supplying the oil from the oil pump driven by the internal combustion engine and by the electrically-driven oil pump to the oil hydraulic device, a wasteful energy loss may be reduced.

According to another aspect of this disclosure, the oil supply system further includes a selector valve being disposed at a position where the relief flow path and the first suction flow path join with each other, and a control unit controlling the selector valve and the second oil pump. The selector valve includes a suction side port of the first suction flow path being connected to the oil reservoir, a supply side port of the first suction flow path being connected to the first oil pump, a relief side port being connected to the relief flow path, and a supply-and-discharge side port being connected to a connection flow path being connected to the second suction flow path. The control unit controls the selector valve in connection with a control of the second oil pump.

Accordingly, in a case where the oil in the oil reservoir is supplied to either the first oil pump or the second oil pump by the control unit controlling the selector valve in connection with the control of the second oil pump, the oil is inhibited from flowing in an unnecessary flow path, and the flow path resistance acted on the oil may be reduced.

According to further aspect of this disclosure, the control unit stops the second oil pump when the internal combustion engine operates, and controls three ports, which are the suction side port, the supply side port, and the supply-and-discharge side port, to be in an open state.

Accordingly, the oil from a portion of the first suction flow path being connected to the oil reservoir flows from the suction side port to the flow path of the first suction flow path connected to the first oil pump. The oil in the oil reservoir flows from the second suction flow path to the suction side port via the connection flow path, and flows in the flow path of the first suction flow path being connected to the first oil pump. As a result, the oil from the first suction flow path and the second suction flow path may be supplied to the first oil pump, and therefore, the negative load of the first oil pump may be reduced by reducing a flow path resistance.

According to still another aspect of this disclosure, in a case where the internal combustion engine shifts to a stopped state by the stop control, the control unit operates the second oil pump, sets the suction side port, the supply side port, and the relief side port in an open state, and controls the supply-and-discharge side port to be in a closed state.

Accordingly, the first oil pump and the second oil pump operate simultaneously before the internal combustion engine completely stops. Accordingly, compared to a case where the oil supply system includes the single suction flow path, the flow path resistance may be reduced because the oil from the first suction flow path is supplied to the first oil pump, and the oil from the second suction flow path is supplied to the second oil pump, by the control of selector valve. In a state where the first oil pump and the second oil pump operate simultaneously, and in a state where the oil flows in the relief flow path by the increase of the discharge pressure level of the first oil pump, because the downstream side of the relief flow path is connected to the first suction flow path, the pressure level (for example, the relief pressure level) that can flow the oil in the relief flow path may be substantially reduced by reducing the pressure level of the downstream side of the relief flow path, and therefore, the negative load acted on the second oil pump may be reduced.

According to further aspect of this disclosure, when the internal combustion engine is in a stopped state, the control unit operates the second oil pump, sets the suction side port and the supply-and-discharge side port in an open state, and the supply side port in a closed state.

Accordingly, in a state where only the second oil pump operates, the oil in the oil reservoir may be sucked via the first suction flow path and the second suction flow path, and therefore, the negative load of the second oil pump may be reduced by the reduction of the flow path resistance. Moreover, the part of the oil supplied from the second oil pump does not flow back to the first oil pump, and therefore, the oil pressure level supplied to the oil hydraulic device may be inhibited form decreasing.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a configuration of an oil supply system of a first embodiment disclosed here;
Fig. 2 is a view illustrating a configuration of an oil supply system of a second embodiment;
Fig. 3 is a view illustrating a flow of an oil in a case where a first oil pump and a second oil pump operate simultaneously;
Fig. 4 is a view illustrating a flow of an oil when the second oil pump operates in the second embodiment;
Fig. 5 is a view illustrating a configuration of an oil supply system of a third embodiment;
Fig. 6 is a view illustrating a flow of an oil in a case where a first oil pump and a second oil pump operate simultaneously; and
Fig. 7 is a view illustrating a flow of an oil when the second oil pump operates in the third embodiment.

### DETAILED DESCRIPTION

Hereinafter, embodiments of the disclosure will be explained with reference to the drawings.

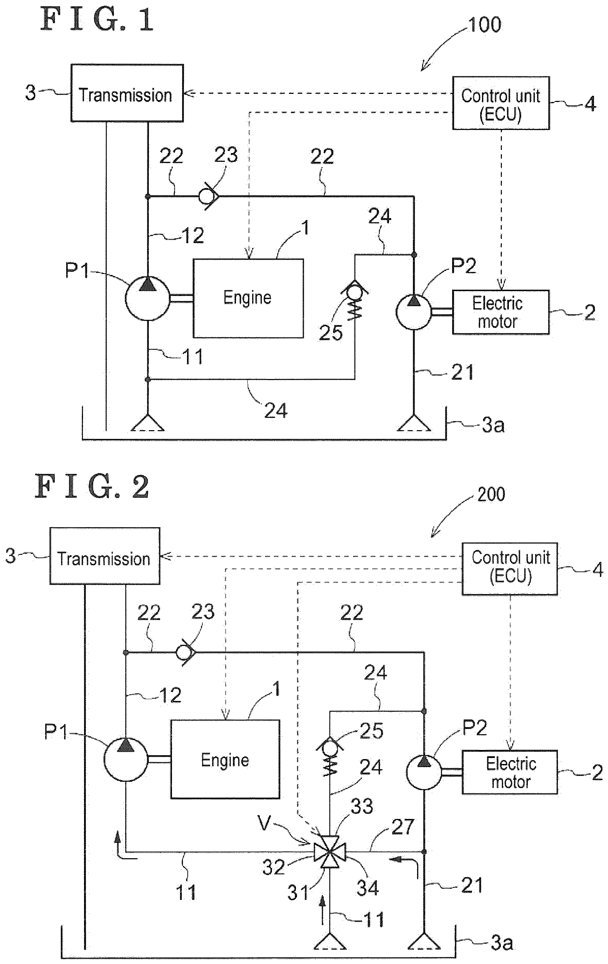

An oil supply system of a first embodiment will hereunder be schematically explained. As shown in Fig. 1, an oil supply system 100 includes a first oil pump P1 driven by an engine 1 serving as an internal combustion engine, a second oil pump P2 driven by a built-in electric motor 2, and flow paths supplying an oil from the first and second oil pumps P1, P2 to a transmission 3 serving as an oil hydraulic device.

The oil supply system 100 is provided at a vehicle of, for example, an automobile, and a control unit 4 functioning as an Electric Control Unit or ECU controls the electric motor 2 of the second oil pump P2. The control unit 4 includes a function controlling the engine 1 and the transmission 3.

The control unit 4 automatically sets a rotary speed of the engine 1 and a gear range of the transmission 3 based on a negative load acted on a running system when the vehicle runs, and based on an acceleration operation performed by a driver. When the vehicle stops by the operation of the brake pedal, the control unit 4 performs the stop control of the engine 1 (so-called idle stop control), and operates the second oil pump P2 in connection with the stop control. As such, when the control unit 4 operates the second oil pump P2, the oil having the pressure level required to maintain the gear-shift state is supplied to the transmission 3.

Moreover, in a case where the operation of the brake pedal is released after the stop control, the control unit 4 operates the start control starting the engine 1, and stops the second oil pump P2 in connection with the start control.

The transmission 3 includes an oil hydraulic clutch shifting the gear range and an oil hydraulic actuator of, for example, an oil hydraulic cylinder. A brushless Direct Current motor or a brushless DC motor is used for the electric motor 2 built in the second oil pump P2, and obtains a drive force corresponding to the supplied electricity.

The first oil pump P1 includes a first suction flow path 11 and a first supply flow path 12. The first suction flow path 11 sucks the oil in an oil pan 3a serving as an oil reservoir of the transmission 3. The first supply flow path 12 supplies the sucked oil to the transmission 3. The second oil pump P2 includes a second suction flow path 21, a second supply path 22, and a relief flow path 24. The second suction flow path 21 sucks the oil in the oil pan 3a. The second supply flow path 22 supplies the sucked oil to the first suction flow path 11. The relief flow path 24 allows the oil to discharge when the discharge pressure level of the second oil pump P2 increases. A downstream side of the relief flow path 24 is connected to the first suction flow path 11.

The second supply flow path 22 includes a check valve 23 closing when the pressure level of the first supply flow path 12 increases. The relief flow path 24 includes a relief valve 25 allowing the oil to discharge in a case where the discharge pressure level of the second oil pump P2 comes to be greater than a set value.

A control mode of the control unit 4 will hereunder be explained. The control unit 4 is set with a basic control mode stopping the second oil pump P2 when the engine 1 operates and operating the second oil pump P2 when the engine 1 stops.

As described above, the control unit 4 controls the engine 1 to stop when the brake pedal is operated and the vehicle stops from a state where the vehicle runs, and controls the engine 1 to start when the brake pedal is released after the stop control.

Either in the stop control or in the start control, the control unit 4 operates the engine 1 (operates the first oil pump P1) and the second oil pump P2 simultaneously so as to continuously supply the oil to the transmission 3.

That is, because the rotary speed of the engine 1 gradually changes by either the stop control or the start control, the control unit 4 operates the second oil pump P2 at a timing when the rotary speed of the engine 1 decreases to a predetermined value in the stop control, and stops the second oil pump P2 at a timing when the rotary speed of the engine 1 increases to a predetermined value in the start control.

A flow of the oil will hereunder be explained. In the oil supply system 100, in a state where the engine 1 operates and the second oil pump P2 completely stops, the oil in the oil pan 3a is sucked from the first suction flow path 11 to the first oil pump P1, and the sucked oil is supplied to the transmission 3 via the first supply flow path 12.

In a state where the engine 1 completely stops and the second oil pump P2 operates, the oil in the oil pan 3a is sucked from the second suction flow path 21 to the second oil pump P2, and the sucked oil is supplied to the transmission 3 via the second supply flow path 22.

As such, because an oil pressure level in a case where the oil is supplied has only to be a value that is greater than a pressure level for maintaining the gear-shift state of the transmission 3, the electricity required to obtain the oil pressure level is supplied to the electric motor 2. The relief pressure level of the relief valve 25 is set at a value that is slightly higher than the pressure level required to maintain the gear-shift state of the transmission 3. Accordingly, the relief valve 25 is inhibited from opening in a state where the engine 1 is stopped.

Specifically, comparing to the oil hydraulic supply device disclosed in Patent reference 1 in which the single flow path is shared by the flow passages of the suction sides of the two oil pumps, because the negative pressure is not acted on the first suction flow path 11 of the first oil pump P1 when the second oil pump P2 of the first embodiment operates, the part of the oil supplied from the second oil pump P2 to the transmission 3 does not flow back to the first oil pump P1.

In the aforementioned stop control and start control, because the first and second oil pumps P1, P2 operate simultaneously, the check valve 23 is closed and the discharge pressure level of the second oil pump P2 increases in a case where the engine 1 rotates relatively high. The relief valve 25 opens in response to the increase of the discharge pressure level, and the discharge pressure level of the second oil pump P2 decreases.

As such, when the relief valve 25 opens in a case where the pressure level of the first supply flow path 12 is high, because the negative pressure of the first suction flow path 11 is acted on the downstream side of the relief flow path 24, the relief pressure level is substantially reduced.

The relief pressure level of the relief valve 25 is set at a value that is greater than the pressure level required for maintaining the gear-shift state of the transmission 3. Because the first oil pump P1 and the second oil pump P2 operate simultaneously, the relief pressure level is substantially reduced in a case where the relief valve 25 opens, and therefore, the negative load applied on the electrically motor 2 is reduced.

A second embodiment of the disclosure will hereunder be explained. The second embodiment includes the same configuration as that of the first embodiment, and includes a different configuration from that of the first embodiment at points where a selector valve V is provided at a position where the relief flow path 24 and the first suction flow path 11 join with each other as shown in Fig. 2, and a connection flow path 27 is newly provided between the selector valve V and the second suction flow path 21.

The selector valve V includes a suction side port 31, a supply side port 32, a relief side port 33, and a supply-and-discharge side port 34. The suction side port 31 of the first suction flow path 11 is connected to the oil pan 3a. The supply side port 32 of the first suction flow path 11 is connected to the first oil pump P1. The relief side port 33 is connected to the relief flow path 24. The supply-and-discharge side port 34 is connected to the connection flow path 27 connected to the second suction flow path 21.

The selector valve V is configured as a rotary valve allowing each of the ports to open and close by driving an electric actuator, and is controlled by the control unit 4.

The oil flow when the engine operates will hereunder be explained. In an oil supply system 200 of the second embodiment, the suction side port 31, the supply side port 32, the relief side port 33, and the supply-and-discharge side port 34 are set in an open state in a state where the engine 1 operates and the second oil pump P2 stops operation. The relief side port 33 may be set in a closed state.

By this control, the negative pressure is acted on the supply side port 32 of the selector valve V in response to the operation of the first oil pump P1. Because the suction side port 31 is in the open state, the oil in the oil pan 3a is supplied from the first suction flow path 11 to the first oil pump P1. Moreover, because the supply-and-discharge side port 34 is in the open state, the oil in the oil pan 3a is supplied from the second suction flow path 21 to the first suction flow path 11 via the connection flow path 27, and as a result, is supplied to the first oil pump P1.

The flow of the oil by this control illustrates with arrows in Fig. 2. Because the oil from the first suction flow path 11 and the second suction flow path 21 is supplied to the first oil pump P1, the negative load acted on the engine 1 is reduced by reducing the flow path resistance.

The flow of the oil when the first oil pump P1 and the second oil pump P2 operate simultaneously will hereunder be explained. Either in the stop control or the start control, the control unit 4 operates the first oil pump P1 and the second oil pump P2 simultaneously in order to supply the oil continuously when operating the stop control and the start control.

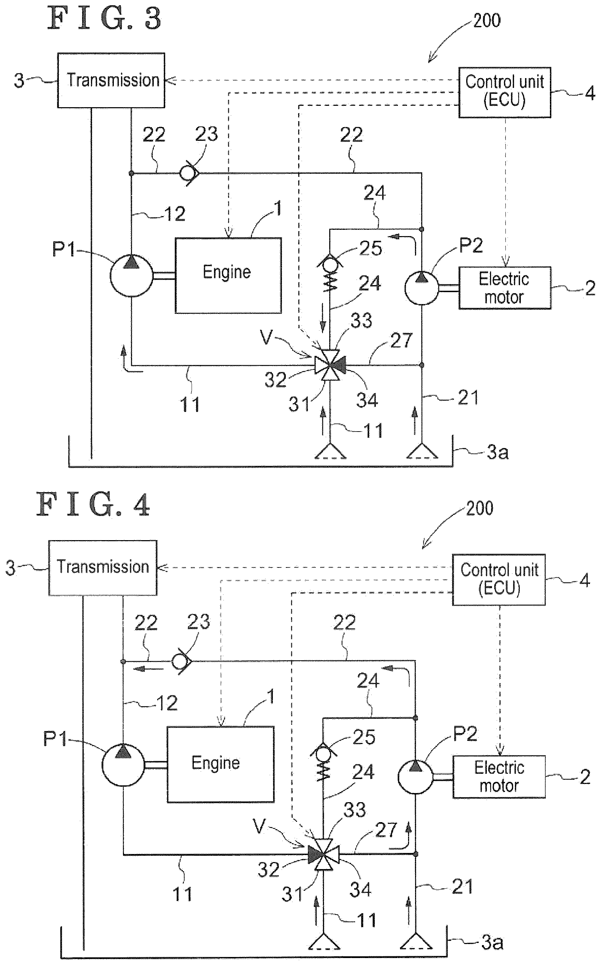

Fig. 3 illustrates the flow of the oil when the first oil pump P1 and the second oil pump P2 operate simultaneously. The control unit 4 sets the suction side port 31, the supply side port 32, and the relief side port 33 of the selector valve V in the open state, and controls the supply-and-discharge side port 34 to be in the closed state when the first oil pump P1 and the second oil pump P2 operate simultaneously. Fig. 3 illustrates the supply-and-discharge side port 34 that is in a closed state with a black-filled image.

In this control, the negative pressure is acted on the supply side port 32 of the selector valve V in response to the operation of the first oil pump P1, and the oil in the oil pan 3a is supplied from the first suction flow path 11 to the first oil pump P1 because the suction side port 31 is in the open state.

The oil in the oil pan 3a is supplied from the second suction flow path 21 to the second oil pump P2, sent from the second supply flow path 22 to the first supply flow path 12, and is supplied in the first supply flow path 12, in response to the operation of the second oil pump P2. Specifically, the pressure level of the first supply flow path 12 increases in a state where the engine 1 relatively rotates in high speed. Accordingly, the check valve 23 is closed and the discharge pressure level of the second oil pump P2 increases. The relief valve 25 opens in response to the increase of the discharge pressure level, and the discharge pressure level of the second oil pump P2 is reduced.

Specifically, in a case where the relief valve 25 opens, because the negative pressure is acted on the first suction flow path 11 in response to the operation of the first oil pump P1, the negative pressure of the first suction flow path 11 is acted on the downstream side of the relief flow path 24, and therefore, the relief pressure level is substantially reduced.

That is, because the relief pressure level of the relief valve 25 is set at a value that is greater than the pressure level required for maintaining the gear-shift state of the transmission 3, the relief pressure level is substantially reduced and the negative load acted on the electric motor 2 is reduced in a case where the relief valve 25 opens in a state where the first oil pump P1 and the second oil pump P2 operate simultaneously.

The oil flow when the engine 1 is in a completely stopped state will hereunder be explained. In a case where the engine 1 is in a completely stopped state, the control unit 4 operates the second oil pump P2, sets the suction side port 31, the supply-and-discharge side port 34, and the relief side port 33 of the selector valve V in the open state, and sets the supply side port 32 in a closed state. The relief side port 33 may be set in the closed state.

Fig. 4 illustrates the flow of the oil in a case where the control unit 4 operates the second oil pump P2, and shows the supply side port 32 that is in the closed state by the control with the black-filled image.

By this control, the negative pressure of the second suction flow path 21 is acted on the supply-and-discharge side port 34 via the connection flow path 27 in response to the operation of the second oil pump P2. The oil sucked at a portion of the first suction flow path 11 communicating with the oil pan 3a is supplied to the connection flow path 27, and at the same time, the oil in the oil pan 3a is sucked in the second suction flow path 21 by the action of the negative pressure of the second suction flow path 21.

Accordingly, the oil from the first suction flow path 11 and the second suction flow path 21 may be supplied to the second oil pump P2, and may be sent out from the second supply flow path 22. Accordingly, the negative load acted on the electric motor 2 is reduced by decreasing the resistance of the flow path.

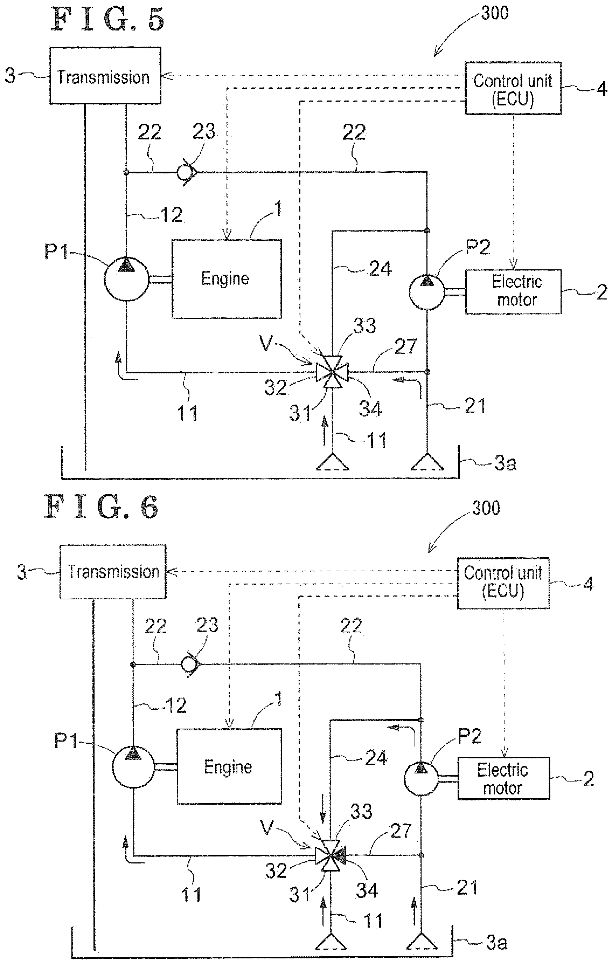

A third embodiment of the disclosure will hereunder be explained. As shown in Fig. 5, the third embodiment includes the configuration that is the same as that of the second embodiment, and includes a configuration different from the second embodiment at a point where the relief valve 25 is not provided at the relief flow path 24.

The flow of the oil when the engine 1 operates will hereunder be explained. In an oil supply system 300 of the third embodiment, the suction side port 31, the supply side port 32, the relief side port 33, and the supply-and-discharge side port 34 are set in the open state in a state where the engine 1 operates and the second oil pump P2 stops. The relief side port 33 may be set in a closed state.

In this control, the negative pressure is acted on the supply side port 32 of the selector valve V in response to the operation of the first oil pump P1. Because the suction side port 31 is in the open state, the oil in the oil pan 3a is supplied from the first suction flow path 11 to the first oil pump P1. In addition, because the supply-and-discharge side port 34 is in the open state, the oil in the oil pan 3a is supplied from the second suction flow path 21 to the first suction flow path 11 via the connection flow path 27, and as a result, is supplied to the first oil pump P1.

The flow of the oil by this control illustrates with arrows in Fig. 5. The oil from the first suction flow path 11 and the second flow path 21 is supplied to the first oil pump P1, and therefore, the negative load acted on the engine 1 is reduced by decreasing the flow path resistance.

The flow of the oil when the first oil pump P1 and the second oil pump P2 operate simultaneously will hereunder be explained. The control unit 4 operates the first oil pump P1 and the second oil pump P2 simultaneously for supplying the oil continuously when operating either the stop control or the start control.

Fig. 6 shows the flow of the oil when the first oil pump P1 and the second oil pump P2 operate simultaneously. When the first oil pump P1 and the second oil pump P2 operate simultaneously, the control unit 4 sets the suction side port 31, the supply side port 32, and relief side port 33 of the selector valve V in the open state, and controls the supply-and-discharge side port 34 to be in the closed state. Fig. 6 shows the supply-and-discharge side port 34 that is in the closed state by this control with the black-filled image.

By this control, the negative pressure is acted on the supply side port 32 of the selector valve V in response to the operation of the first oil pump P1. Because the suction side port 31 is in the open state, the oil in the oil pan 3a is supplied from the first suction flow path 11 to the first oil pump P1.

The oil in the oil pan 3a is supplied from the second suction flow path 21 to the second oil pump P2, sent from the second supply flow path 22 to the first supply flow path 12, and is supplied in the first supply flow path 12. Specifically, in a state where the engine 1 rotates relatively high by this control, the pressure level of the first supply flow path 12 increases. Accordingly, the check valve 23 closes and the discharge pressure level of the second oil pump P2 increases.

As a result, the oil from the second oil pump P2 flows from the relief side port 33 to the supply side port 32 via the selector valve V, and as a result, is supplied to the first oil pump P1 by being supplied in the relief flow path 24.

As such, because the oil in the second oil pump P2 is supplied to the first suction flow path 11 of the first oil pump P1, the negative load acted on the second oil pump P2 is reduced, and the negative load acted on the electric motor 2 is reduced.

The flow of the oil when the engine 1 is completely stopped will hereunder be explained. In a state where the engine 1 is completely in a stopped state, the control unit 4 operates the second oil pump P2, sets the suction side port 31 and the supply-and-discharge side port 34 of the selector valve V in the open state, and sets the supply side port 32 and the relief side port 33 in the closed state.

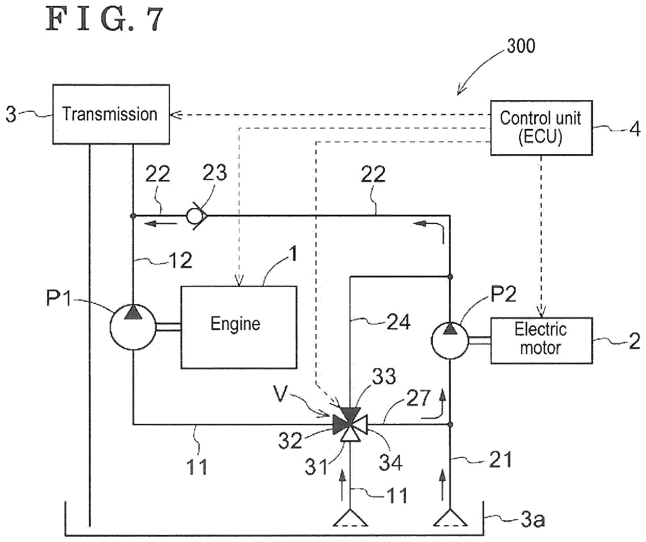

Fig. 7 illustrates the flow of the oil in a case where the control unit 4 operates only the second oil pump P2, and shows the supply side port 32 and the relief side port 33 that are in the closed state by this control with the black-filled images.

By this control, the negative pressure of the second suction flow path 21 is acted on the supply-and-discharge side port 34 via the connection flow path 27 in response to the operation of the second oil pump P2. By the action of the negative pressure, the oil sucked at a position of the first suction flow path 11 communicating with the oil pan 3a is supplied to the connection flow path 27, and at the same time, the oil in the oil pan 3a is sucked at the second suction flow path 21.

Accordingly, the oil from the first suction flow path 11 and the second suction flow path 21 may be supplied to the second oil pump P2, and sent out from the second supply flow path 22. Accordingly, the negative load acted on the electric motor 2 may be reduced by reducing the flow path resistance. Specifically, in this configuration, because the relief valve 25 does not have to be provided, the number of components is reduced, and therefore, the cost may be reduced.

The disclosure may be configured as below in addition to the aforementioned first, second, and third embodiments. The components having the same functions as those of the aforementioned first, second and third embodiments are marked with the same reference numerals.

For example, an oil supply system may be configured such that a lubricant oil of the engine 1 is supplied as an operation oil to a variable valve timing control device controlling the opening and closing timing of the intake valve of the engine 1 by an oil pressure level.

In this configuration, an oil supply system includes the first oil pump P1 driven by the engine 1 and the second oil pump P2 driven by the electric motor 2, and supplies the lubricant oil accumulated in the oil pan 3a of the engine 1 to the variable valve timing control device serving as an oil hydraulic device.

The disclosure will be used in an oil supply system supplying an oil from a first oil pump driven by an internal combustion engine and an electrically-driven second oil pump to an oil hydraulic device.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An oil supply system (100, 200, 300), comprising:
a first oil pump (P1) configured to be driven by a drive force generated at an internal combustion engine (1) that performs a stop control and a start control in response to a running state of a vehicle; and
an electrically-driven second oil pump (P2), wherein
the first oil pump (P1) includes
a first suction flow path (11) configured to suck an oil in an oil reservoir (3a); and
a first supply flow path (12) configured to supply the sucked oil to an oil hydraulic device (3),
the second oil pump (P2) includes
a second suction flow path (21) configured to suck the oil in the oil reservoir (3a);
a second supply flow path (22) including a check valve (23) configured to supply the sucked oil to the first suction flow path (11); and
a relief flow path (24) allowing the oil to discharge when a discharge pressure level of the second oil pump (P2) increases, and
the relief flow path (24) is connected to the first suction flow path (11).

2. The oil supply system (100, 200, 300) according to Claim 1, further comprising:
a selector valve (V) being disposed at a position where the relief flow path (24) and the first suction flow path (11) join with each other; and
a control unit (4) configured to control the selector valve (V) and the second oil pump (P2),
wherein
the selector valve (V) includes
a suction side port (31) of the first suction flow path (11) being connected to the oil reservoir (3a);
a supply side port (32) of the first suction flow path (11) being connected to the first oil pump (P1);
a relief side port (33) being connected to the relief flow path (24); and
a supply-and-discharge side port (34) being connected to a connection flow path (27) being connected to the second suction flow path (21), and
the control unit (4) is configured to control the selector valve (V) in connection with a control of the second oil pump (P2).

3. The oil supply system (100, 200, 300) according to Claim 2, wherein the control unit (4) is configured to stop the second oil pump (P2) when the internal combustion engine (1) operates, and to control three ports, which are the suction side port (31), the supply side port (32), and the supply-and-discharge side port (34), to be in an open state.

4. The oil supply system (100, 200, 300) according to either Claim 2 or 3, wherein in a case where the internal combustion engine (1) shifts to a stopped state by the stop control, the control unit (4) operates the second oil pump (P2), sets the suction side port (31), the supply side port (32), and the relief side port (33) in an open state, and controls the supply-and-discharge side port (34) to be in a closed state.

5. The oil supply system (100, 200, 300) according to any one of Claims 2 to 4, wherein when the internal combustion engine (1) is in a stopped state, the control unit (4) operates the second oil pump (P2), sets the suction side port (31) and the supply-and-discharge side port (34) in an open state, and the supply side port (32) in a closed state.
